# EUROPEAN PATENT APPLICATION

(11) **EP 1 845 728 A2**
(43) Date of publication of application: **17.10.2007**
(21) Application number: 07004340.1
(22) Date of filing: 02.03.2007
(51) Int. Cl.: H04N 7/24

(54) **Time shift apparatus and method for digital multimedia broadcasting terminal**

(30) Priority: 10.04.2006 KR 20060032234
(71) Applicant: Samsung Electronics Co., Ltd., Suwon-si, Gyeonggi-Do (KR)
(72) Inventor: Jang, Sun Hee, Suwon-si, Gyeonggi-do (KR); Cho, Byung Duck, Suwon-si, Gyeonggi-do (KR)
(74) Representative: Boakes, Jason Carrington

(57) **Abstract**

A time shift apparatus and method for a digital multimedia broadcasting (DMB) terminal are disclosed wherein bookmarks are automatically placed at individual programs during time-shift recording of broadcast data, thereby enabling movement between programs. A broadcast data recording method comprises performing, in response to a request for a time-shift/bookmark operation during reception of DMB broadcast data, a time-shift operation; finding start times of individual programs in the broadcast data during the time-shift operation; and inserting a bookmark at each program and storing the broadcast data.

## Description

### BACKGROUND OF THE INVENTION

### 1. Field of the Invention

The present invention relates generally to a digital broadcasting system and, more particularly, to a time shift apparatus and method for a digital multimedia broadcasting (DMB) terminal.

### 2. Description of the Related Art

Conventional analog broadcasting systems are being replaced by digital broadcasting systems that can provide high quality video, audio and other service to users.

With advances in digital broadcasting and mobile communication technologies, digital broadcasting services that can be received while in motion, particularly a digital multimedia broadcasting (DMB) service using mobile terminals has attracted much attention. In a DMB service, various multimedia signals, including audio and video, are digitally modulated and delivered to fixed, portable or in-vehicle receivers.

DMB services are based on digital audio broadcasting (DAB) technology for digital radios, and further include multimedia broadcasting concepts to additionally deliver moving images and information services such as weather, news and location services. Because DMB services can provide compact disc (CD) or digital versatile disc (DVD)-like high quality audio and video broadcast data to users in motion through mobile or in-vehicle receivers, they are attracting attention as next generation broadcast services.

Specifically, DMB services enable mobile equipment to receive various multimedia broadcast data of multiple channels through mobile or in-vehicle terminals having an omnidirectional receiving antenna.

Compared with existing broadcasting services, DMB services can be characterized by mobility. DMB systems are divided by signal transmission mechanisms into terrestrial and satellite systems. DMB systems are compared with existing broadcasting systems and comparison results are summarized in Table 1.

As shown in Table 1, compared with existing broadcasting services, DMB services can be characterized by their mobility and small size of their receivers. Broadcasting services are provided though ground stations in terrestrial DMB systems, and are provided through artificial satellites in satellite DMB systems.

In a satellite DMB system as a new broadcast medium, programs are transmitted from a DMB broadcast center to satellites, which then retransmit the programs to mobile DMB terminals in a wide coverage area of the satellites. Owing to use of satellites, satellite DMB services are available in outdoor environments across a large area. Gap fillers or repeaters may be required to receive DMB signals and retransmit the received DMB signals in order to provide services to users in shadow areas such as underground or indoor regions.

**Table 1**

| | Mobility | | Comparison |
|---|---|---|---|
| | Fixed | Mobile | |
| Transmission mechanism | Existing public broadcasting | Terrestrial DMB | Ground station |
| | Existing satellite broadcasting | Satellite DMB | Artificial satellite |
| Comparison | Middle to large receiver | Very small receiver | |

As shown in Table 1, in a terrestrial DMB system, programs are transmitted through a spectrum suitable for terrestrial propagation. Unlike the satellite DMB system, broadcast signals are transmitted through on ground base stations, which are similar to those for mobile terminals. A terrestrial DMB service is a multimedia service combining TV, audio and data broadcasting that is provided through terrestrial waves to mobile devices.

The configuration of a system providing such DMB services is described as follows.

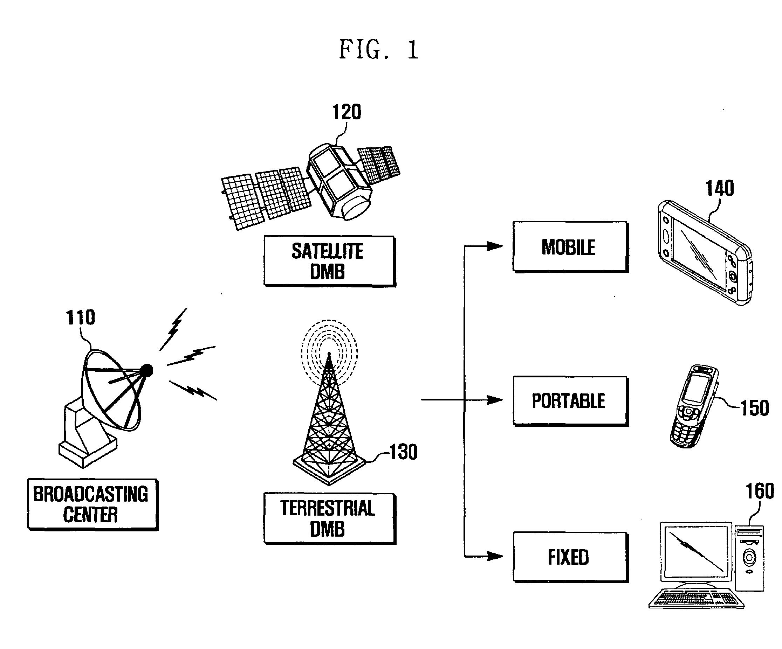

FIG. 1 shows the configuration of a digital broadcasting system providing general digital broadcasting services.

As shown in FIG. 1, the digital broadcasting system includes a data broadcasting center 110, one or more satellites 120, one or more base stations 130, and a plurality of mobile, portable and fixed receivers such as vehicle receivers 140, mobile terminals 150 and home receivers 160.

The data broadcasting center 110 compresses and modulates DMB signals representing audio, video and data, and transmits the modulated DMB signals to corresponding satellites 120 or base stations 130.

Each satellite 120 or base station 130 receiving the DMB signals from the data broadcasting center 110 amplifies the received DMB signals, and retransmits the amplified DMB signals at different frequencies to the receivers 140, 150 and 160.

Each receiver 140, 150 or 160 receives the DMB signals from the corresponding satellite 120 or base station 130, and demodulates and decompresses the received DMB signals to output uncompressed audio, video and data.

Rapidly advancing digital broadcasting technologies have enabled fast moving receivers to receive noise-free digital broadcast programs, and users have demanded development of new added functions and services for more user convenience.

### SUMMARY OF THE INVENTION

The present invention has been made in view of at least the above problems, and an aspect of the present invention is to provide an apparatus and method for a digital multimedia broadcasting (DMB) terminal, enabling efficient delivery of DMB services.

Another aspect of the present invention is to provide an apparatus and method for a DMB terminal wherein the user can select and view a desired program in a time-shift operation.

Another aspect of the present invention is to provide an apparatus and method for a DMB terminal wherein start times of programs are identified in time-shift recording and bookmarks associated with the start times are placed in the time-shifted recording; and the programs are successively replayed upon user requests so that the user can select and view a desired one of the programs.

Another aspect of the present invention is to provide an apparatus and method for a DMB terminal wherein a bookmark can be automatically placed for each program of broadcast data in a time-shift recording.

Another aspect of the present invention is to provide an apparatus and method for a DMB terminal wherein an advertisement is skipped in time-shift recorded broadcast data so that the advertisement-free broadcast data can be displayed.

In accordance with the present invention, there is provided a broadcast data recording method for a DMB terminal, including performing, in response to a request for a time-shift/bookmark operation during reception of DMB broadcast data, a time-shift operation; determining start times of individual programs in the broadcast data during the time-shift operation; and placing a bookmark at each program and storing the broadcast data.

In accordance with another embodiment of the present invention, there is provided a broadcast data recording method for a DMB terminal, including identifying an event, if an occurrence of the event is detected during reception of DMB broadcast data; performing a time-shift operation on the broadcast data, if the identified event is a request for a time-shift operation, performing a time-shift operation on the broadcast data, if the identified event is a request for a time-shift/bookmark operation, and finding start times of programs in the broadcast data to perform a bookmark operation; and placing a bookmark at each program and storing the broadcast data.

In accordance with yet another embodiment of the present invention, there is provided a method of broadcast data writing on a program basis for a DMB terminal, including detecting an occurrence of a data write event for transport stream (TS) data; reading the current time, if an occurrence of the data write event is detected; comparing the current time with a start time of a next program; writing TS data to a file using an event identifier of a current program, if the current time is less than the start time; and writing TS data to the file using an event identifier of the next program, if the current time is greater than the start time.

In accordance with still another embodiment of the present invention, there is provided a bookmark method for a DMB terminal, including writing transport stream data to a predetermined file in a time-shift task; writing, by the time-shift task, the transport stream data to a flash file for processing in one of a stop mode and a continue mode according to an event occurrence; demultiplexing, by a demultiplexer, the transport stream data written to the flash file and transmitting the demultiplexed data to a demultiplexer task; parsing, by the demultiplexer task, information of an electronic program guide (EPG) related with the transport stream data and writing the parsed information to an EPG data processor; and placing a bookmark at each time-shifted program using one of an event information table (EIT) and the electronic program guide (EPG).

In accordance with still yet another embodiment of the present invention, there is provided a broadcast data replay method for a DMB terminal, including replaying, in response to a user request, requested broadcast data in time-shift recorded broadcast programs; detecting an occurrence of an event during replay of the broadcast data; and jumping over the broadcast data by a preset interval, if an occurrence of the event is detected, and containing the replay of the broadcast data.

In accordance with a further embodiment of the present invention, there is provided a time shift apparatus for a DMB terminal, including a DMB module for producing transport stream data from received broadcast data; a data storage unit for storing as a file the transport stream data from the DMB module and tables related with the transport stream data; a bookmark processor for identifying an event, in response to an occurrence of the event, for extracting a requested portion of the transport stream data, if the identified event is a request for a time-shift operation, and storing the extracted portion in an area of the data storage unit, and for time-shifting the transport stream data, if the identified event is a request for a time-shift/bookmark operation, finding start times of programs in the transport stream data being time-shifted, and placing a bookmark at each program.

### BRIEF DESCRIPTION OF THE DRAWINGS

The above and other objects, features and advantages of the present invention will be more apparent from the following detailed description in conjunction with the accompanying drawings, in which:
FIG. 1 illustrates a digital broadcasting system providing general digital broadcasting services;
FIG. 2 illustrates a digital multimedia broadcasting (DMB) terminal according to the present invention;
FIG. 3 is a block diagram illustrating DMB time-shift/bookmark processing according to the present invention;
FIG. 4 is a flow chart illustrating a time-shift/bookmark method for a DMB terminal according to the present invention;
FIG. 5 is a flow chart illustrating processing steps in a time shift task of the DMB time-shift/bookmark processing of FIG. 3; and
FIG. 6 is a flow chart illustrating a method to deliver time-shifted/bookmarked programs for a DMB terminal according to the present invention.

### DETAILED DESCRIPTION OF PREFERRED EMBODIMENTS

Hereinafter, preferred embodiments of the present invention are described in detail with reference to the accompanying drawings. Some constructions or processes known in the art are not described to avoid obscuring the invention in unnecessary detail. Particular terms may be defined to describe the invention in the best manner. Accordingly, the meaning of specific terms or words used in the specification and the claims should not be limited to the literal or commonly employed sense, but should be construed in accordance with the spirit of the invention. The description of the various embodiments is to be construed as exemplary only and does not describe every possible instance of the invention. Therefore, it should be understood that various changes may be made and equivalents may be substituted for elements of the invention.

The present invention relates to a digital broadcasting system. The present invention provides an apparatus and methods of delivering added services for user convenience in a digital multimedia broadcasting (DMB) environment using a DMB terminal.

Specifically, according to the present invention, there are provided a bookmark apparatus and method in a DMB environment wherein bookmarks are automatically placed at individual programs of audio or video broadcast data that has been time-shift recorded in a DMB terminal, thereby enabling a convenient selection of programs. Further, in a replay mode, the user can skip an undesired advertisement inserted in the time-shift recorded broadcast data and access audio or video data after the advertisement through the use of jumping by an average advertisement time via pressing a predetermined key or through the use of jumping to a next bookmark.

In general, a time-shift operation refers to recording broadcast data on a storage medium during reception of the DMB, usually in order to perform another operation, such as a phone call, and replaying the recorded broadcast data from the beginning at a later time convenient to the user.

According to the present invention, a time-shift/bookmark operation enables the user to select and view a desired program in such a time-shift operation. That is, during recording of broadcast data, start points of programs are detected and bookmarks are placed at the start points. Later, when predetermined events occur from the user, branches are made to corresponding programs in the sequence of the bookmarks. Here, the length of broadcast data recording depends on the capacity of a storage medium, however the number of repetitions of recording/replay is preferably not limited by the capacity of a storage medium.

From a DMB broadcast center, digitally compressed video and audio streams are broadcast, and DMB system and program information conforming to the Program and System Information Protocol (PSIP) is also broadcast along with the streams. Within the broadcast data from the DMB broadcast center, broadcast program information and data other than the video and audio streams are included and displayed as an electronic program guide (EPG) to provide information on the broadcast programs to the user.

A DMB terminal that can receive and process the broadcast data from the DMB broadcast center is used to deliver a DMB service. That is, the DMB terminal receives broadcast data transmitted in a manner described above from the DMB broadcast center, and delivers the received broadcast data to the user.

The time-shift operation of a DMB terminal enables the user to record currently played broadcast data on a storage medium when the user cannot presently watch or listen to the broadcast data using the DMB terminal, and to replay a recorded portion of the broadcast data to the user at a later time convenient to the user.

In time shifting, the user can record currently played broadcast data on a storage medium by inputting a key through a key input unit, and then replay the broadcast data recorded on the storage medium from a position that has not been received by the user by inputting another key.

The user initiates such a time-shift operation using a key input through an input unit to record currently playing broadcast data on a storage medium, and selects and replays the time-shift recorded broadcast data using another key input.

A DMB terminal provides user convenience in use of a DMB service through a time-shift operation. The present invention also provides an apparatus and method offering more convenience to the user through a time- shift operation. That is, there are provided a time-shift/bookmark apparatus and method wherein bookmarks are automatically placed for individual programs of broadcast data time-shift recorded in a DMB terminal, thereby enabling easy movement between programs.

Although, for purposes of the following description, a DMB terminal is described as an example, the present invention is not limited to such a DMB terminal. The DMB terminal of the present invention is a terminal that can receive and output DMB programs, and may be any one of information and communication appliances and multimedia appliances that can receive a DMB service, for example a mobile communication terminal, a mobile phone, a DMB receiver, a wired phone, a wireless a phone, a personal digital assistant (PDA), a smart phone, a notebook computer, and a personal computer. The DMB terminal may be applied to applications using such appliances.

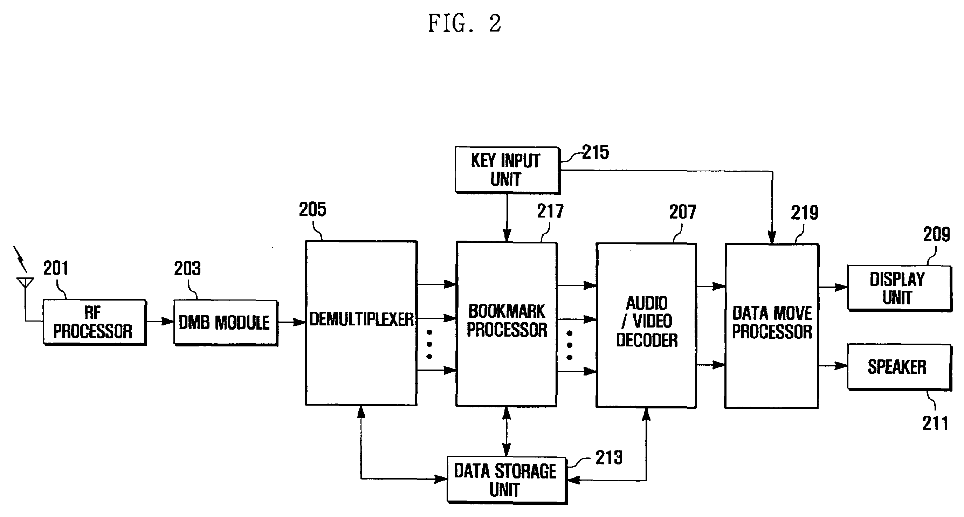

FIG. 2 is a diagram illustrating a DMB terminal having a time-shift/bookmark capability according to the present invention.

Referring to FIG. 2, the DMB terminal comprises a radio frequency (RF) processor 201, a DMB module 203, a demultiplexer 205, an audio/video decoder 207, a display unit 209, a speaker 211, a data storage unit 213, a key input unit 215, a bookmark processor 217, and a data move processor 219.

The RF processor 201 receives through an antenna a broadcast signal (for example, a code division multiplexed broadcast signal) transmitted by a satellite or terrestrial DMB broadcasting center, RF-processes (converts) the received broadcast signal into a baseband broadcast signal, and outputs the processed broadcast signal to the DMB module 203. The broadcast signal may include one or more of video, text, audio and data signals corresponding to broadcast channels available from the DMB broadcasting center.

The DMB module 203 receives the broadcast signal converted by the RF processor 201, detects a channel signal of a channel requested by the user, and outputs the detected channel signal to the demultiplexer 205. The DMB module 203 receives the broadcast signal from the RF processor 201, creates transport stream (TS) data corresponding to the received broadcast signal, and outputs the TS data to the demultiplexer 205.

The demultiplexer 205 receives the channel signal (the TS data) from the DMB module 203, demultiplexes the channel signal into video, text and audio signals, and outputs the demultiplexed signals to the audio/video decoder 207.

The audio/video decoder 207 receives the demultiplexed video, text and audio signals from the demultiplexer 205, decodes the demultiplexed video, text and audio signals using decoding schemes corresponding to coding schemes used by the DMB broadcasting center, and outputs the decoded signals to output means, for example, the display unit 209 and/or speaker 211.

The display unit 209 and speaker 211 deliver the signals decoded by the audio/video decoder 207 to the user in the formof video and/or audio. The signals from the DMB terminal are preferably displayed in various forms. For example, the video signal may be displayed in a full window or a split window on the screen of the display unit 209.

The data storage unit 213 stores data related to a DMB service, and can write data structures containing tables associated with the DMB service to a file. The data storage unit 213 manages the data structures containing data on the DMB service received from a DMB broadcasting center, and writes the data structures to the file upon termination of the DMB service. In the data storage unit 213, data contained in the tables associated with the DMB service is read upon operation initiation (power-on) of the DMB terminal, and is written upon operation termination (power-off) of the DMB terminal. The data storage unit 213 writes broadcast data that is time-shift recorded or time-shift/bookmark recorded to a file according to start and end times of the broadcast data.

The data storage unit 213 may include a program memory and a data memory. The program memory may store control program modules for controlling ordinary operations of the DMB terminal. The program memory may also store application program modules for performing a time-shift/bookmark operation and for performing an advertisement skipping operation to replay only advertisement-free broadcast data by skipping an advertisement in broadcast data recorded through the time-shift/bookmark operation, according to the present invention.

The data storage unit 213 stores broadcast data resulting from the execution of the program modules, and setting information associated with a DMB service, and may include a database for managing various kinds of data. The database preferably includes mapping data for interconnecting user data delivered from the DMB terminal, applications related with a DMB service, and broadcast data associated with the DMB service.

The program module implementing the time-shift/bookmark operation may be loaded as a special-purpose application that may include a program module which, in response to an occurrence of a user event for a time-shift/bookmark operation, time-shift records broadcast data, places a bookmark at each broadcast program in the time-shift recorded broadcast data, and replays the time-shift recorded broadcast data, may include a program module for detecting and identifying the user event, may include a program module for providing added functionalities related with a DMB service corresponding to the identified user event, and may include a program module for setting, changing and managing information on the user event.

The program module implementing the advertisement skipping operation may be loaded as a special-purpose application that may include a program module for skipping an advertisement in time-shift recorded broadcast data in response to an occurrence of a user event for an advertisement skipping operation, a program module for detecting and identifying the user event, a program module for detecting a data segment or data frame corresponding to the advertisement to be skipped on the basis of the identified user event and controlling a jump to the end point of the detected data frame, and a program module for setting, changing and managing information on the user event.

The key input unit 215 includes numeric, character and function keys for inputting user information or a user event to set various functions, and informs the bookmark processor 217 of an occurrence of the user event.

The bookmark processor 217 receives and handles a user event through the key input unit 215. When an event of time-shifting occurs, the bookmark processor 217 extracts a corresponding segment of DMB broadcast data and transmits the extracted segment to a storage area (e.g. a buffer) of the data storage unit 213. When an event of bookmarking occurs from the user during handling of an event of time-shifting, the bookmark processor 217 finds the start point of each program and places a bookmark at the start point while time-shift recording broadcast data, so that the user can select and replay a desired program. Later, when an event of a bookmarked program request occurs from the user, the bookmark processor 217 indexes to the requested program.

The data move processor 219 provides a capability to skip display of an advertisement inserted in time-shift/bookmark recorded audio or video broadcast data of a program. That is, during replay of the time-shift/bookmark recorded audio or video broadcast data, a corresponding portion thereof is skipped over in response to a predetermined event.

In more detail, in a time-shift operation, an advertisement, in addition to a bookmark for each program, may be recorded and inserted into time-shift recorded broadcast programs. When audio or video data of each time-shift recorded broadcast program is replayed in response to a user request, the advertisement is also replayed at the point of insertion. The data move processor 219 can terminate replay of the advertisement according to a user key input or a preset value, jump to the end point of the advertisement, and continue replay of the recorded program without interruption.

Preferably, when the data move processor 219 recognizes that audio or video data of an advertisement is currently being replayed, it terminates replay of the advertisement according to a user key input or user setting, and immediately jumps to the end point of the advertisement to skip the advertisement.

That is, in the case when an advertisement is inserted in time-shift/bookmark recorded audio or video broadcast data of a program, if an advertisement skipping command is received through the key input unit 215, the data move processor 219 immediately jumps to the end point of the advertisement and delivers to the user the recorded audio or video broadcast data excluding the advertisement.

For advertisement skipping, the data move processor 219 preferably jumps over an advertisement by a predetermined time, or preferably detects data frames of an advertisement and jumps to the end point of the last data frame. Accordingly, in the present invention, the DMB terminal jumps to the end point of an advertisement in response to an advertisement skipping command, thereby delivering recorded audio or video broadcast data to the user without interruption.

In addition, for control of movement between programs during delivery of recorded audio or video broadcast data, if a bookmarked program movement command is received through the key input unit 215, the data move processor 219 immediately jumps to the bookmark of a next program.

Although not shown in FIG. 2, the DMB terminal may further include an external interface for transmitting broadcast data from the DMB broadcasting center to an external device such as a television, and a communication module for connecting to a wireless communication network for a mobile communication service. The DMB terminal may further include a timer for providing the current time, reference times for broadcast programs, and time information set to perform necessary operations in cooperation with a time-shift operation and time-shift/bookmark operation.

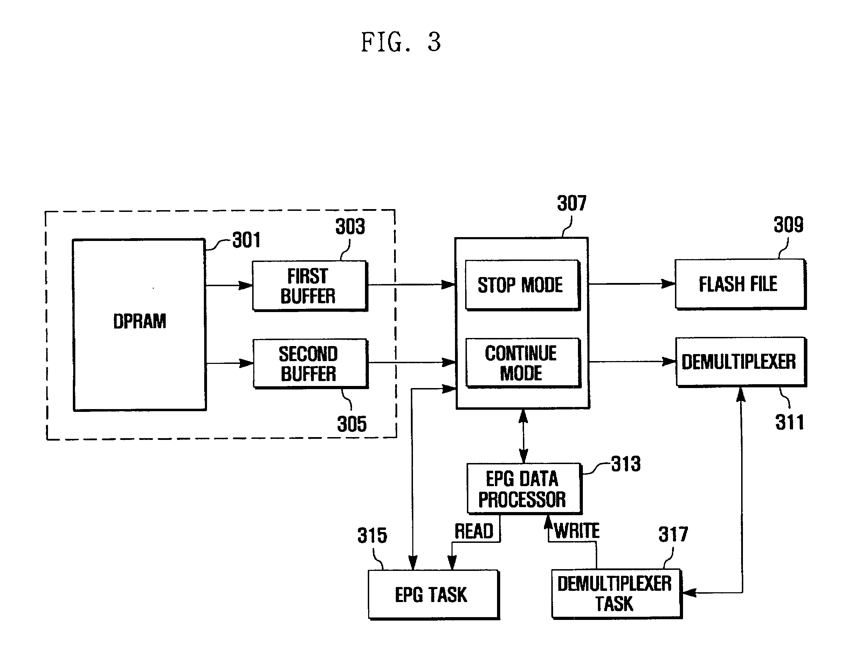

FIG. 3 is a block diagram illustrating DMB time-shift/bookmark processing of the present invention.

Referring to FIG. 3, broadcast data (TS data) transmitted to a data storage (for example a dual port random access memory (DPRAM) 301) is double buffered through a first buffer 303 and a second buffer 305. When the first buffer 303 and second buffer 305 are full, the TS data is written to a file.

A time-shift task 307 performs operations necessary for a stop mode or a continue mode in response to user events or commands. In the stop mode, the TS data is written to the file, and then is stored in a flash file 309. In the continue mode, the TS data is stored in the flash file 309 and is demultiplexed through a demultiplexer 311 for replay. The demultiplexer 311 sends the demultiplexed data to a demultiplexer task 317, which parses the EPG related to the demultiplexed data and writes the parsed data to an EPG data processor 313.

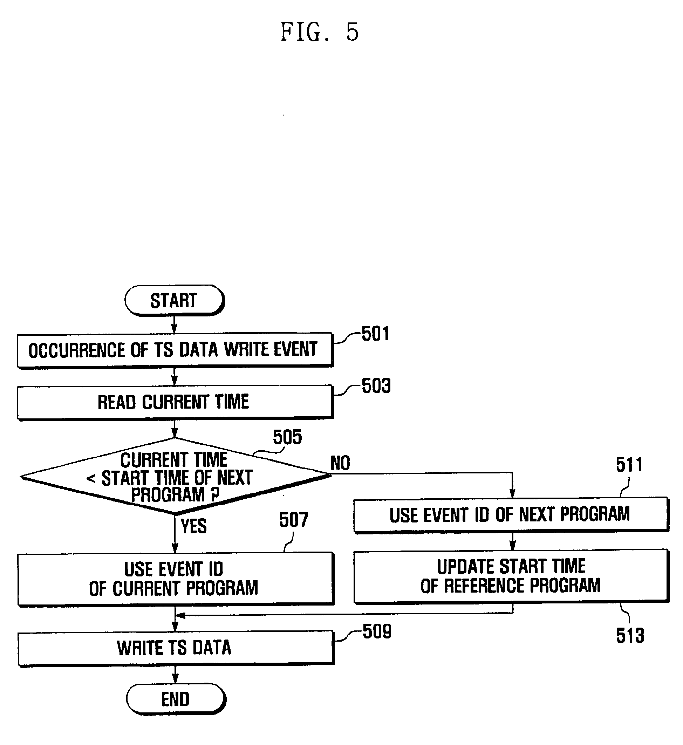

The configuration of the file is illustrated in Table 2. The method to create the file (how to write TS data on a program basis) is described later in relation to FIG. 5.

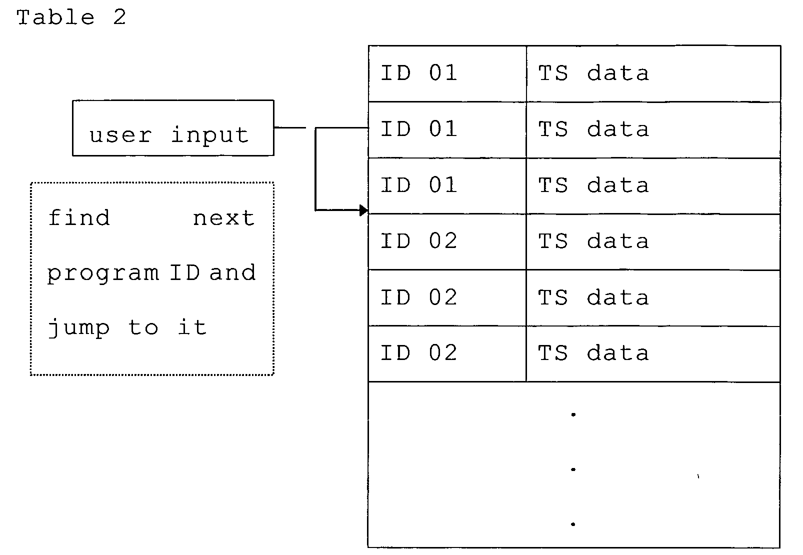

Referring to FIG. 3 and Table 2, steps to bookmark each program in time-shift recorded broadcast data after time-shifting are described as follows.

The time-shift/bookmark operation according to the present invention may be implemented using an event information table (EIT) or EPG data.

To use the EIT, EIT schedule information of the EPG is utilized. That is, the EPG data processor 313 in FIG. 3 obtains the start time and event identifier (ID) (as shown in Table 2) of each program using an EPG database (namely, EIT schedule information) pre-stored in an EPG task 315, and arranges the TS data on a program basis.

To identify data on a program basis, the TS data to be written to the flash file 309 preferably includes a two-byte event ID amended to the TS data.

To assign an appropriate event ID to the transmitted TS data before writing, start times stored in the EIT schedule information are compared with the current time to determine whether the TS data belongs to either the current program or a next program.

To use the EPG data, when the EIT of the EPG is updated through the EPG task 315, each program ID is updated and bookmarks are placed on a program basis.

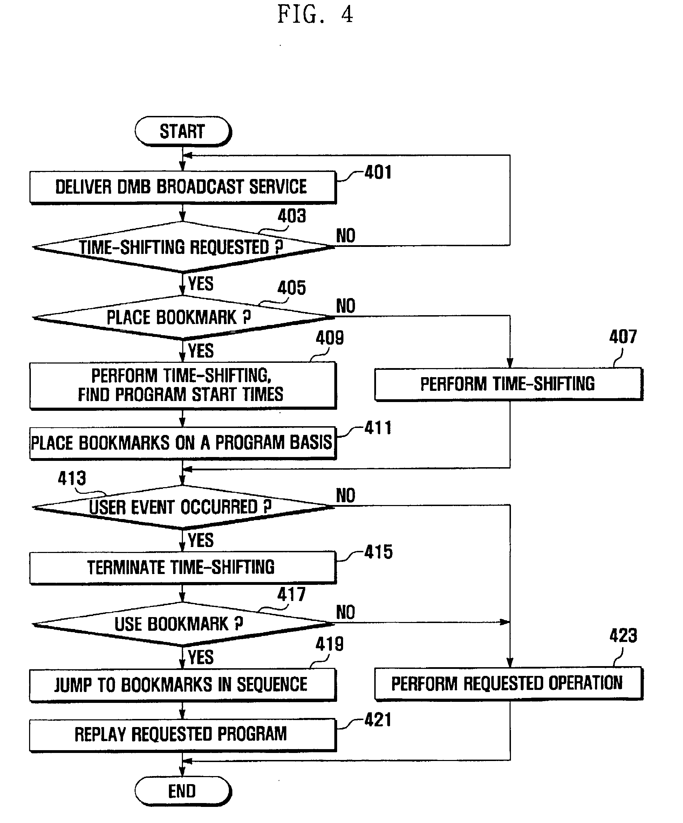

FIG. 4 is a flow chart illustrating a time-shift/bookmark method for a DMB terminal according to the present invention.

In the time-shift/bookmark method shown in FIG. 4, a DMB broadcast service is delivered (step 401). During delivery of the DMB broadcast service, a determination is made whether a time-shift request is input from the user through a predetermined input means (step 403). If a time-shift request is input, if the time-shift request is a time-shift/bookmark request, a determination is made whether to place a bookmark in the DMB broadcast (step 405).

If a predetermined event occurs through the predetermined input means, a time-shift operation or time-shift/bookmark operation is performed. The event may be a key input from the user, a switch to a mobile communication service due to reception of a call or message, a power failure due to battery discharge, or any other predetermined event that can occur in the DMB terminal or in an external appliance operating in collaboration with the DMB terminal.

If a time-shift/bookmark request is determined not to be input at step 405, a time-shift operation is performed (step 407).

If a time-shift/bookmark request is determined to be input at step 405, a time-shift operation is performed and start times of individual programs in the DMB broadcast service are identified (step 409). After start time identification, a bookmark is placed at each program (step 411).

During the time-shift or time-shift/bookmark operation, if a predetermined key event occurs through the input means (step 413), the time-shift operation is terminated (step 415). That is, the time-shift operation is terminated in response to a predetermined event (preferably, a key input) caused by the user.

If a predetermined key event requesting a bookmark operation occurs from the user (step 417), the DMB terminal scans through the bookmarks in sequence (step 419) to replay the requested program, for example, broadcast data of a bookmarked program corresponding to the initiation time of the time-shift operation (step 421).

If no event occurred at step 413, performance of the time-shift operation is continued, and if an operation other than a bookmark operation is requested at step 417, the requested operation is performed (step 423). For example, the DMB broadcast service may be continuously delivered after termination of the time-shift operation.

FIG. 5 is a flow chart illustrating processing steps in the time-shift task 307 in FIG. 3 according to the present invention.

Referring to FIG. 5, when a write event for transmitted TS data occurs (step 501), the current time is read (step 503). The current time is compared with the start time of a next program (step 505).

At this time, an event ID field is preferably amended to the TS data for arrangement of TS data on a program basis. To assign an appropriate event ID to the TS data before writing, the start time stored in the EIT schedule information is compared with the current time to determine whether the TS data belongs to either the current program or the next program.

If the current time is less than the start time of the next program at step 505, the event ID of the current program is assigned to the event ID field (step 507), and the event ID-assigned TS data is written to the flash file (step 509).

If the current time is greater than the start time of the next program at step 505, the event ID of the next program is assigned to the event ID field (step 511), a reference program start time is updated (step 513), and the event ID-assigned TS data is written to the flash file (step 509).

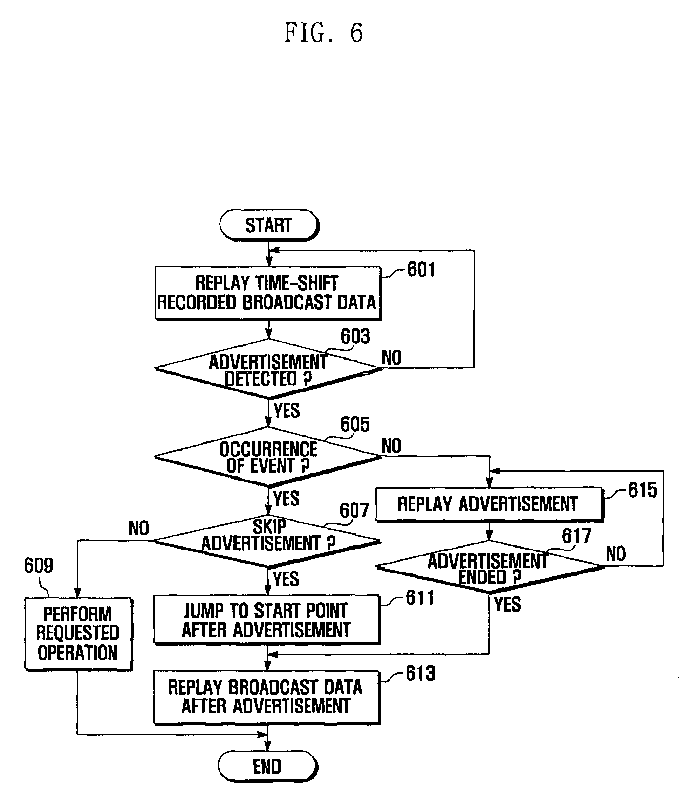

FIG. 6 is a flow chart illustrating a method to deliver a time-shifted/bookmarked program for a DMB terminal according to the present invention.

Referring to FIG. 6, audio or video data of time-shift/bookmark recorded broadcast programs is replayed according to a user request (step 601). If an advertisement is detected in the time-shift recorded audio or video data (namely, if an advertisement has been recorded during a corresponding time-shift operation) (step 603), the DMB terminal determines if a predetermined event occurs (step 605).

If an event occurrence is detected at step 605, the DMB terminal determines if the event is an advertisement skipping event (step 607). If the event is an advertisement skipping event, the DMB terminal jumps to the start point of a portion of the audio or video data after the advertisement (step 611), and the DMB data after the advertisement is replayed in succession after replay of the portion before the advertisement (step 613).

Advertisement skipping may be performed by skipping over an advertisement by a preset average advertisement time (for example, 30 seconds), or by automatically detecting data frames containing the advertisement using predetermined identifiers and jumping to the end point of the last data frame.

If an event other than advertisement skipping occurred at step 607, a requested operation is performed according to the event (step 609). For example, a termination event may cause termination of replay of the audio or video data, or an event of requesting a bookmarked program may cause a jump to another bookmarked program for replay.

If no event occurrence is detected at step 605, the advertisement is replayed (step 615). If replay of the advertisement is completed (step 617), the audio or video data after the advertisement is replayed in succession (step 613).

As apparent from the above description, the present invention provides a time shift apparatus and method for a digital multimedia broadcasting (DMB) terminal. Bookmarks can be automatically placed at individual programs during time-shift recording of broadcast data, and the bookmarked programs can be replayed in sequence according to user requests, thereby providing to the user a convenient DMB service. In addition, during the replay of bookmarked programs, advertisements inserted in the time-shift recorded broadcast data can be skipped over according to user settings or requests. Consequently, the user can conveniently enjoy an added functionality of a DMB terminal.

While preferred embodiments of the present invention have been shown and described in this specification, it will be understood by those skilled in the art that various changes or modifications of the embodiments are possible without departing from the spirit and scope of the invention as defined by the appended claims.

## Claims

1. A broadcast data recording method for a digital multimedia broadcasting (DMB) terminal, comprising the steps of:
performing a time-shift operation in response to a request for a time-shift/bookmark operation during reception of DMB broadcast data;
determining start times of individual programs in the broadcast data during the time-shift operation; and
setting a bookmark at each program and storing with setting information of the bookmarks.

2. The broadcast data recording method of claim 1, further comprising:
detecting an event during reception of DMB broadcast data; and
identifying the event.

3. The broadcast data recording method of claim 1, further comprising:
identifying an event, if the event is detected during reception of DMB broadcast data;
performing a time-shift operation on the DMB broadcast data if the identified event is a request for a time-shift operation; and
if the identified event is a request for a time-shift/bookmark operation, performing a time-shift operation on the DMB broadcast data, finding start times of individual programs, and performing a bookmark operation.

4. The broadcast data recording method of claim 3, further comprising:
detecting an event during the time-shift operation or time-shift/bookmark operation; and
if an occurrence of a predetermined event is detected, terminating the time-shift operation or time-shift/bookmark operation according to the event.

5. The broadcast data recording method of claim 1, further comprising:
if a bookmark use event is detected , locating a requested program by scanning the bookmarked programs in sequence; and
replaying the time-shifted broadcast data from a start point of the requested program.

6. The broadcast data recording method of claim 5, further comprising:
detecting advertisement data during replay of the time-shifted broadcast data; and
if advertisement data is detected, forwarding by an interval corresponding to the advertisement data and resuming play of the broadcast data from an end point of the interval.

7. The broadcast data recording method of claim 5, further comprising:
if an occurrence of an event is detected during replay of the time-shifted broadcast data, identifying the event;
if the identified event is a request of movement by a preset interval, forwarding by the interval and resuming the broadcast data from an end point of the interval; and
if the identified event is a request of movement between bookmarked programs, forwarding to one of a next and a previous program according to the event, and resuming play of broadcast data of the next or previous program.

8. A broadcast data recording method for a digital multimedia broadcasting (DMB) terminal, comprising:
if an occurrence of an event is detected during reception of DMB broadcast data, identifying the event;
if the identified event is a request for a time-shift operation, performing a time-shift operation on the broadcast data;
if the identified event is a request for a time-shift/bookmark operation, performing a time-shift operation on the broadcast data, and finding start times of programs in the broadcast data to perform a bookmark operation; and
inserting a bookmark at each program and storing the broadcast data with the inserted bookmark.

9. The broadcast data recording method of claim 8, further comprising:
detecting an event during the time-shift operation or time-shift/bookmark operation; and
if a predetermined event is detected, terminating the time-shift operation or time-shift/bookmark operation according to the event.

10. The broadcast data recording method of claim 8, further comprising:
if a bookmark use event is detected, locating a requested program by scanning the bookmarked programs in sequence; and
replaying the time-shifted broadcast data after a start point of the requested program.

11. The broadcast data recording method of claim 10, further comprising:
detecting advertisement data during replay of the time-shifted broadcast data; and
if advertisement data is detected, forwarding by an interval corresponding to the advertisement data and resuming the broadcast data from an end point of the interval.

12. The broadcast data recording method of claim 10, further comprising:
if an event is detected during replay of the time-shifted broadcast data, identifying the event;
if the identified event is a request of movement by a preset interval, forwarding by the interval and resuming play of the broadcast data from an end point of the interval; and
if the identified event is a request of movement between bookmarked programs, forwarding to a next or previous program according to the event and resuming play of broadcast data of the next or previous program.

13. A method of broadcast data writing on a program basis for a digital multimedia broadcasting (DMB) terminal, comprising:
detecting a data write event for transport stream (TS) data;
if the data write event is detected, reading the current time;
comparing the current time with a start time of a next program;
if the current time is less than the start time, writing TS data to a file using an event identifier of a current program; and
if the current time is greater than the start time, writing TS data to the file using an event identifier of the next program.

14. The method of claim 13, wherein the TS data includes an event identifier indicating a program to which the TS data belongs.

15. The method of claim 13, wherein the TS data is augmented with an event identifier field indicating a program to which the TS data belongs, the current time is compared with program start times to assign one of an event identifier of a current program and that of a next program to the event identifier field, and the augmented TS data is written to the file.

16. The method of claim 15, wherein the program start times are obtained using schedule information of an event information table.

17. The method of claim 13, further comprising, if the current time is greater than the start time of the next program, updating a start time of a reference program and writing the TS data using an event identifier of the next program.

18. A bookmark method for a digital multimedia broadcasting (DMB) terminal, comprising the steps of:
writing transport stream data to a file in a time-shift task;
writing, by the time-shift task, the transport stream data to a flash file for processing in a stop mode or continue mode according to an event occurrence;
demultiplexing, by a demultiplexer, the transport stream data written to the flash file and transmitting the demultiplexed data to a demultiplexer task;
parsing, by the demultiplexer task, information of an electronic program guide (EPG) related with the transport stream data and writing the parsed information to an EPG data processor; and
setting a bookmark at each time-shifted program using one of an event information table (EIT) and the electronic program guide (EPG).

19. The bookmark method of claim 18, wherein the transport stream data is written to the flash file in the stop mode.

20. The bookmark method of claim 18, wherein the transport stream data is written to the flash file and demultiplexed through the demultiplexer for replay in the continue mode.

21. The bookmark method of claim 18, wherein, at the step of placing a bookmark, if using an EIT, start times and event identifiers of individual programs are obtained using schedule information of the EIT contained in an EPG database, the transport stream data to be written to the flash file is augmented with an event identifier field indicating to which program the transport stream data belongs, the current time is compared with start times of a current program and a next program to determine to which program the transport stream data belongs, an event identifier of the current program or next program is assigned to the event identifier field according to the comparison result, and the transport stream data augmented with the event identifier field is written to the flash file.

22. The bookmark method of claim 18, wherein, at the step of placing a bookmark, if using an EPG, event identifiers of programs are updated and associated bookmarks are placed at the programs when the EIT of the EPG is updated through an EPG task.

23. A broadcast data replay method for a digital multimedia broadcasting (DMB) terminal, comprising the steps of:
in response to a user request, replaying requested broadcast data in time-shift recorded broadcast programs;
detecting an event during replay of the broadcast data; and
if an occurrence of the event is detected, forwarding the broadcast data by a preset interval and resuming play of the broadcast data.

24. The broadcast data replay method of claim 23, further comprising:
if an advertisement is detected during replay of the broadcast data, detecting an event;
if an occurrence of the event is detected, forwarding an end point of the advertisement and resuming play of the broadcast data after the end point of the advertisement; and
if an occurrence of the event is not detected, resuming play of the advertisement.

25. The broadcast data replay method of claim 24, wherein said forwarding to an end point of the advertisement includes forwarding past the broadcast data for an average advertisement time preset in relation to the event.

26. The broadcast data replay method of claim 24, wherein said forwarding to an end point of the advertisement includes detecting data frames containing the advertisement, determining a last one of the data frames, and forwarding to an end point of the last data frame.

27. The broadcast data replay method of claim 23, further comprising, if the event is a request of movement between programs, forwarding to a next/previous recorded program according to the request and resuming play of broadcast data of the next/previous program.

28. A time shift apparatus for a digital multimedia broadcasting (DMB) terminal, comprising:
a DMB module for producing transport stream data from received broadcast data;
a data storage unit for storing the transport stream data from the DMB module and tables related with the transport stream data as a file;
a bookmark processor for identifying an event in response to the for extracting a requested portion of the transport stream data and storing the extracted portion in an area of the data storage unit if the identified event is a request for a time-shift operation, and if the identified event is a request for a time-shift/bookmark operation for time-shifting the transport streamdata, finding start times of programs in the transport stream data being time-shifted, and placing a bookmark at each program.

29. The time shift apparatus of claim 28, further comprising a data move processor for controlling replay of an advertisement contained in broadcast data of a program recorded through a time-shift/bookmark operation of the bookmark processor.

30. The time shift apparatus of claim 29, wherein the data move processor controls data replay in such a manner that, if an event occurs during replay of the broadcast data, replay is forwarded past the advertisement by a predetermined interval, and replay of the broadcast data is continued.

31. The time shift apparatus of claim 29, wherein the data move processor controls data replay in such a manner that, if an event occurs during replay of the broadcast data, replay is forwarded past the advertisement for a preset average advertisement time, and replay of the broadcast data is continued.

32. The time shift apparatus of claim 29, wherein the data move processor controls data replay in such a manner that, if an event occurs during replay of the broadcast data, data frames containing the advertisement are detected, a last one of the data frames is determined, replay is forwarded to an end point of the last data frame, and replay of the broadcast data is continued.

33. The time shift apparatus of claim 29, wherein the data move processor controls data replay in such a manner that, if an event of movement between programs occurs during replay of the broadcast data, replay is forwarded to a next or previous recorded program according to the event, and broadcast data of the next or previous program is replayed.

34. The time shift apparatus of claim 28, wherein if an event of bookmarked program requesting is detected the bookmark processor replays the bookmarked programs in sequence.

35. The time shift apparatus of claim 28, wherein the data storage unit stores in a file the transport stream data processed by the time-shift operation or time-shift/bookmark operation, according to start and end times.

36. The time shift apparatus of claim 28, wherein the data storage unit stores control program modules for controlling ordinary operations of the DMB terminal, and application program modules for performing a time-shift/bookmark operation and for performing an advertisement skipping operation to replay only advertisement-free broadcast data by skipping an advertisement in broadcast data recorded through the time-shift/bookmark operation.

37. The time shift apparatus of claim 36, wherein the data storage unit further stores broadcast data resulting from execution of the program modules and setting information associated with a DMB service, and wherein the data storage unit includes a database for managing broadcast data and program data.

38. The time shift apparatus of claim 36, wherein the application program modules performing the time-shift/bookmark operation include:
a) a programmodule for time-shift recording broadcast data in response to an occurrence of a predetermined event, placing a bookmark at each broadcast program in the time-shift recorded broadcast data, and replaying the time-shift recorded broadcast data;
b) a program module for detecting and identifying the event;
c) a program module for providing added functionalities related with a DMB service corresponding to the identified event; and
d) a program module for setting, changing and managing information on the event.

39. The time shift apparatus of claim 36, wherein the application program modules performing the advertisement skipping operation include:
a) a program module for skipping an advertisement contained in time-shift recorded broadcast data in response to an occurrence of a predetermined event;
b) a program module for detecting and identifying the event;
c) a program module for detecting, on the basis of the identified event, data frames corresponding to an advertisement to be skipped or a preset interval related with an advertisement to be skipped, finding a last one of the data frames, and controlling a forwarding to an end point of the last data frame; and
d) a program module for setting, changing and managing information on the event.
